# EUROPÄISCHE PATENTSCHRIFT

(11) **EP 3 039 286 B1**
(45) Veröffentlichungstag und Bekanntmachung des Hinweises auf die Patenterteilung: **29.09.2021**
(21) Anmeldenummer: 14755364.8
(22) Anmeldetag: 22.08.2014
(51) Int. Cl.: F03D 7/02, F03D 9/25

(54) **WINDENERGIEANLAGE MIT EIGENVERSORGUNGSEINHEIT**
WIND TURBINE COMPRISING AN INTERNAL POWER SUPPLY UNIT
ÉOLIENNE ÉQUIPÉE D'UN MODULE D'AUTO-ALIMENTATION

(30) Priorität: 27.08.2013 DE 102013217087
(43) Veröffentlichungstag der Anmeldung: 06.07.2016
(73) Patentinhaber: Siemens Gamesa Renewable Energy Service GmbH, 22297 Hamburg (DE)
(72) Erfinder: WEISSFLOG, Oliver, 23843 Bad Oldesloe (DE)
(74) Vertreter: Glawe, Delfs, Moll
(86) Internationale Anmeldenummer: PCT/EP2014/067890
(87) Internationale Veröffentlichungsnummer: WO 2015/028399

(56) Entgegenhaltungen:
- WO-A1-2011/014343
- DE-A1- 10 317 422
- DE-A1-102009 017 244
- US-A1- 2011 140 511
- None

## Beschreibung

Die Erfindung betrifft eine Windenergieanlage mit einer Eigenversorgungseinheit. Die Windenergieanlage umfasst einen Windrotor zum Antrieb eines Generators mit einem Umrichter zur Erzeugung elektrischer Leistung sowie eine Steuerung. Zur Eigenversorgung ist ein Eigenbedarfstransformator vorgesehen, der wiederum über eine Leistungsverbindung von dem Umrichter oder dem Generator versorgt ist.

Bei der Montage von Windenergieanlagen und insbesondere deren Inbetriebnahme wird eine Leistungsversorgung benötigt, um die für gewisse Funktionen der Windenergieanlage benötigte elektrische Energie bereitstellen zu können. Derartige Funktionen sind außer solchen der Steuerung der Windenergieanlage selbst auch die Ansteuerung von gewissen Aktuatoren, bspw. des Azimutsystems zum Verschwenken der Gondel je nach Windrichtung.

Überlicherweise wird zu Zwecken des Aufbaus bzw. der Inbetriebnahme der Windenergieanlage an der Montagestelle ein Stromaggregat bereitgestellt, welches meist als ein Dieselgenerator ausgeführt ist. Damit werden Spannungen von 230 V und 400 V Spannungsebenen zur Versorgung erzeugt. Da für den typischerweise leistungsstarken Azimutantrieb eine höhere Spannungsebene erforderlich ist (von in der Regel 660 V), ist dem Stromaggregat noch ein zusätzlicher Transformator beigestellt, der die benötigte 660 V Spannungsebene aus den von dem Dieselaggregat erzeugten Spannungsebenen bereitstellt. Ein solcher zusätzlicher Transformator ist beispielsweise aus der WO 2011/014343 A1 bekannt. Das Bereitstellen und der anschließende Abtransport des zusätzlichen Transformators sind trotz seiner portablen Ausführung aufwendig.

Aus der DE 10 2009 017 244 A1 ist eine Windenergieanlage mit einem Eigenbedarfsnetz bekannt, zu dessen Versorgung ein Eigenbedarfstransformator vorgesehen ist.

Grundsätzlich ist dieses bekannte Konzept der Heranziehung eines Stromaggregats mit einem zusätzlichen Transformator zur Erzeugung der höheren Spannungsebene zwar praxistauglich, jedoch ist es im Einsatz relativ aufwendig. Zudem ergibt sich ein Sicherheitsproblem, da die direkte Speisung des Azimutantriebs über die von dem Zusatztransformator bereitgestellte höhere Spannung eine Umgehung von Sicherheitssystemen in der Gondel der Windenergieanlage erfordert. Damit wird das Risiko bei einer ohnehin schon gefahrgeneigten Tätigkeit weiter erhöht.

Der Erfindung liegt die Aufgabe zu Grunde, die Eigenversorgung der Windenergieanlage insbesondere bei Aufbau und Inbetriebnahme auf eine Weise zu ermöglichen, welche die vorgenannten Nachteile vermeidet.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage umfassend einen Windrotor zum Antrieb eines Generators mit einem Umrichter zur Erzeugung elektrischer Leistung, einer Steuerung und eine Eigenversorgungseinheit, für die ein Eigenbedarfstransformator vorgesehen ist, der mit seinem Speiseanschluss über eine Leistungsverbindung an den Generator und/oder den Umrichter angeschlossen ist und die Eigenversorgungseinheit über ihren Niederspannungsanschluss versorgt, ist erfindungsgemäß vorgesehen eine Schalteinrichtung für den Eigenbedarfstransformator, die dazu ausgebildet ist, in einem Rückwärtsbetrieb einen Leistungsfluss durch den Eigenbedarfstransformator derart umzukehren, dass im Rückwärtsbetrieb der Speiseanschluss des Eigenbedarfstransformators als Ausgang fungiert und an einen Oberspannungsverbraucher angeschlossen ist, und ein Ausgabeanschluss des Eigenbedarfstransformators als Eingang fungiert und von dem Niederspannungsanschluss der Eigenversorgungseinheit gespeist ist.

Die Erfindung beruht auf dem Gedanken, bereits zur Inbetriebnahme der Windenergieanlage auf den ohnehin vorhandenen Eigenbedarfstransformator zurückzugreifen. Im Regelbetrieb setzt der Eigenbedarfstransformator die von dem Generator-Umrichter-System erzeugte Spannung von einem Oberspannungsniveau (beispielsweise 660 V) so weit herunter, dass sie auf einem Niederspannungsniveau (beispielsweise 400 V) für die Eigenversorgung verwendet. Der Eigenbedarfstransformator führt also im Normalbetrieb ein Herabsetzen der Spannung durch. Die Erfindung macht sich diesen ohnehin bereits vorhandenen Transformator zunutze, indem sie bei Inbetriebnahme den Leistungsfluss durch ihn umkehrt und damit dessen Funktion invertiert, nämlich hin zu einem spannungsheraufsetzenden Transformator. Indem so der Leistungsfluss durch den Eigenbedarfstransformator umgeschaltet wird zu einem Rückwärtsbetrieb, kann er zur Erzeugung des bei der Inbetriebnahme benötigten Oberspannungsniveaus herangezogen werden, für das bisher ein gesonderter Zusatztransformator bereitgestellt werden musste.

Die Erfindung hat erkannt, dass durch den Rückwärtsbetrieb des Eigenbedarfstransformators die Verwendung eines gesonderten Zusatztransformators für die Inbetriebnahme überflüssig wird. Da das benötigte Oberspannungsniveau dank des rückwärtsbetriebenen Eigenbedarfstransformators gondelintern erzeugt wird (und nicht von extern mittels gesondertem Zusatztransformator zugeführt wird), ist eine Abschaltung von Sicherheitssystemen der Gondel zwecks Einspeisung der Oberspannung von extern nicht mehr erforderlich. Damit werden die im Stand der Technik aufgetretenen Sicherheitsprobleme vermieden.

Die Erfindung vereint damit auf verblüffend einfache Weise die Vorteile einer weniger aufwendigeren Lösung mit denen einer gleichzeitig auch noch sichereren Lösung.

Zweckmäßigerweise ist die Schalteinrichtung als ein Teil einer Rückspeiseverteilung ausgebildet, welche modular montier- und demontierbar ist. Dies ermöglicht nicht nur eine kompakte Bauweise, sondern auch eine Vormontage der Rückspeiseverteilung mit der Schalteinrichtung bereits im Werk. Damit ist montageseitig alles für die Inbetriebnahme vorbereitet, so dass in dieser Hinsicht keine Arbeiten am Aufstellort selbst mehr durchgeführt zu werden brauchen. Die Inbetriebnahme kann einfach durch Nutzung der Rückspeiseverteilung erfolgen. Nach erfolgter Inbetriebnahme kann sogar die nicht mehr benötigte Rückspeiseverteilung modular ausgebaut und für die Montage anderer Windenergieanlagen wieder verwendet werden.

Zweckmäßigerweise ist die Rückspeiseverteilung so ausgeführt, dass sie an den Oberspannungsverbraucher der Eigenversorgungseinheit angeschlossen ist und an den Speiseanschluss des Eigenbedarfstransformators angelegt ist. Damit ist sichergestellt, dass durch die modular montierte Rückspeiseverteilung eine Versorgung mit dem benötigten Oberspannungsniveau (660 V) erreicht ist. Bei dem Oberspannungsverbraucher kann es sich insbesondere um einen Oberspannungsanschluss der Eigenversorgungseinheit handeln.

Besonders zweckmäßig ist die modulare Ausführung der Rückspeiseverteilung dann, wenn die Rückspeiseverteilung in der Windenergieanlage bereits vormontiert ist. Eine besonders einfache Ausführungsmöglichkeit für die Schalteinrichtung besteht in einer umlegbaren Kabelverbindung. Vorzugsweise ist die Leistungsverbindung des Eigenbedarfstransformators bei betätigter Schalteinrichtung von dem Eigenbedarfstransformator isoliert.

Zweckmäßigerweise ist die Rückspeiseverteilung in einem Gehäuse ausgeführt, durch welches jede der Phasen mittels einer Sicherung geführt ist und die vorzugsweise zumindest auf einer Seite flexible Anschlussleitungen zum ortsveränderlichen Betrieb aufweist. Damit kann die Demontage nach erfolgter Inbetriebnahme leicht durchgeführt werden, und die Rückspeiseverteilung ist bereit zur problemlosen Wiederverwendung. Mittels der intern angeordneten Sicherungen wird auch eine ausreichende Eigensicherung bereitgestellt, so dass keine zusätzlichen externen Sicherungsmaßnahmen für die Inbetriebnahme ergriffen zu werden brauchen.

Die Erfindung erstreckt sich ferner auf eine Nachrüstenergieversorgung für Windenergieanlagen, die einen Windrotor zum Antrieb eines Generators mit einem Umrichter zur Erzeugung elektrischer Leistung und eine Steuerung aufweisen, umfassend einen Eigenbedarfstransformator zur Versorgung, der mit seinem Speiseanschluss über eine Leistungsverbindung an den Generator und/oder Umrichter angeschlossen ist und die Energieversorgungseinheit über ihren Niederspannungsanschluss versorgt, wobei erfindungsgemäß vorgesehen ist, dass die Nachrüstenergieversorgung eine Schalteinrichtung für den Eigenbedarfstransformator aufweist, die dazu ausgebildet ist, in einem Rückwärtsbetrieb einen Leistungsfluss durch den Eigenbedarfstransformator derart umzukehren, dass im Rückwärtsbetrieb der Speiseanschluss des Eigenbedarfstransformators als Ausgang fungiert und an einen Oberspannungsverbraucher angeschlossen ist, und ein Ausgabeanschluss des Eigenbedarfstransformators als Eingang fungiert und von dem Niederspannungsanschluss der Eigenversorgungseinheit gespeist ist.

Die Erfindung erstreckt sich ferner auf ein Verfahren zum Errichten und Inbetriebnehmen einer Windenergieanlage, die einen Windrotor zum Antrieb eines Generators mit einem Umrichter zur Erzeugung elektrischer Leistung und eine Steuerung aufweist, wobei zur Eigenversorgung eine Eigenversorgungseinheit und ein Eigenbedarfstransformator vorgesehen sind, wobei erfindungsgemäß vorgesehen ist ein Umschalten des Eigenbedarfstransformators in einen Rückwärtsbetrieb mit umgekehrter Leistungsflussrichtung, wobei der Eigenbedarfstransformator eine erhöhte Spannung erzeugt, und ein Verwenden eines Speiseanschlusses des Eigenbedarfstransformators als Ausgang mit einem Umklemmen von einer Leistungsquelle zu einem Oberspannungsanschluss der Eigenversorgungseinheit.

Zur näheren Erläuterung dieser weiteren Aspekte der Erfindung wird auf vorstehende Beschreibung verwiesen.

Die Erfindung wird nachfolgend unter Bezugnahme auf die beigefügte Zeichnung näher erläutert, in der ein vorteilhaftes Ausführungsbeispiel dargestellt ist. Es zeigen:

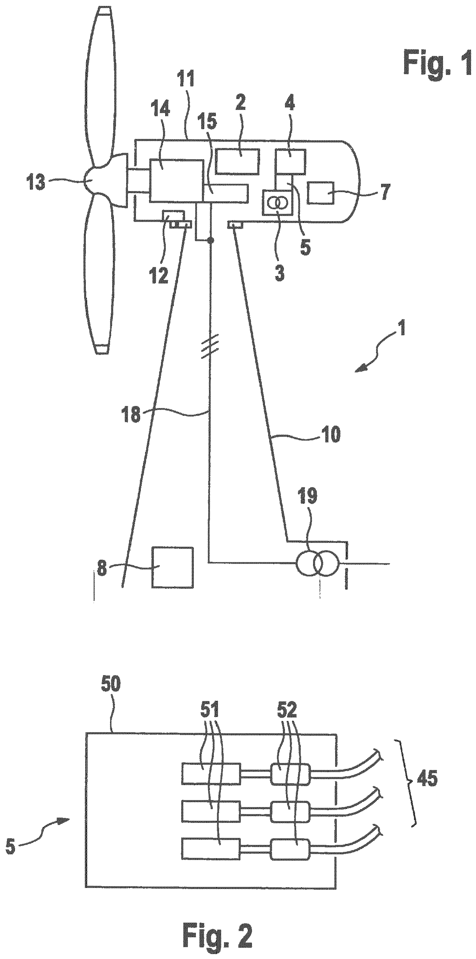

- Fig. 1:: eine schematische Ansicht einer Windenergieanlage gemäß einem Ausführungsbeispiel der Erfindung;
- Fig. 2:: eine Detailansicht zu einem Rückspeisemodul des Ausführungsbeispiels gemäß Fig. 1;
- Fig. 3:: eine funktionale Darstellung einer Eigenversorgung ohne Rückspeisung; und
- Fig. 4:: eine funktionale Darstellung der Eigenversorgung mit Rückspeisung gemäß dem Ausführungsbeispiel der Erfindung.

Eine Windenergieanlage gemäß einem Ausführungsbeispiel der Erfindung ist in ihrer Gesamtheit mit der Bezugsziffer 1 bezeichnet. Sie umfasst einen Turm 10, an dessen oberem Ende eine Gondel 11 schwenkbeweglich angeordnet ist. Die Schwenkbeweglichkeit ist in der Horizontalebene gegeben, so dass die Gondel 11 sich um die Mittelachse des Turms 10 dreht. Als Aktuator hierfür ist ein Schwenkantrieb 12 vorgesehen, der mittels eines Ritzels und einem am Turm fest angeordneten Zahnrad die Gondel 11 verschwenkt.

An einer Stirnseite der Gondel 11 ist ein Windrotor 13 drehbar angeordnet, der über eine Rotorwelle einen innerhalb der Gondel 11 angeordneten Generator 14 antreibt. Der Generator 14 erzeugt elektrische Leistung, die er mit dem an ihn angeschlossenen Umrichter 15 über eine Verkabelung 18 im Turm 10 abgibt zu einem Anlagentransformator 19 im Fuß des Turms 10. Über diesen wird die elektrische Leistung an ein Netz (nicht dargestellt) abgegeben.

Weiter in der Gondel 11 angeordnet sind eine Steuerung 2, welche als Betriebssteuerung für die Windenergieanlage fungiert sowie ein Eigenbedarfstransformator 3, welcher die für den Betrieb der Komponenten innerhalb der Gondel, insbesondere der Steuerung 2 sowie deren Eigenversorgungseinheit 4 benötigte elektrische Energie bereitstellt. Ferner ist in der Gondel 2 eine unterbrechungsfreie Stromversorgung (USV) 7 vorgesehen, wobei alternativ oder zusätzlich ein Notstromaggregat 8 im Turm 10 angeordnet sein kann.

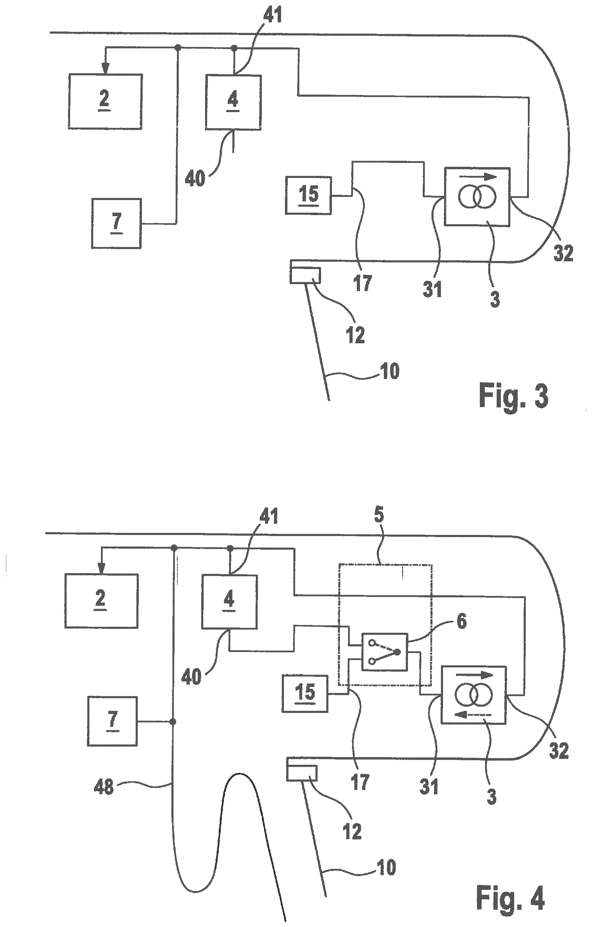

Im Regelbetrieb (s. Fig. 3) der Windenergieanlage 1 erfolgt eine Versorgung mit elektrischer Leistung für die Steuerung 2 und ihrer Eigenversorgungseinheit 4 über einen Eigenbedarfstransformator 3. Er ist mit seinem Speiseanschluss 31 über eine Leistungsverbindung 17 an den Umrichter 15 angeschlossen und wird auf diese Weise von dem Generator 14 mit elektrischer Leistung versorgt. Die Leistungsflussrichtung durch den Eigenbedarfstransformator 3 ist in Fig. 3 mit einem Pfeil dargestellt. Die elektrische Leistung wird von dem Eigenbedarfstransformator von der Spannung des Umrichters 15, die üblicherweise 660 V beträgt, herunter transformiert auf eine Spannung von etwa 400 V, entsprechend der üblichen Netzspannung im Drehstromsystem, und an seinem Ausgangsanschluss 32 ausgegeben zur Abgabe an einen 400 V Niederspannungsanschluss 41 der Eigenversorgungseinheit 4, an dem auch die Steuerung 2 angeschlossen ist. Zur Notstromversorgung ist die USV 7 an den Niederspannungsanschluss 41 der Energieversorgungseinheit 4 angeschlossen, ggf. auch das Notstromaggregat 8. Sie bilden auch die Stromquelle für die Inbetriebnahme.

Bei dem hier beschriebenen Ausführungsbeispiel der Erfindung ist eine Schalteinrichtung 6 vorgesehen (s. Fig. 4), welche zur Inbetriebnahme die Leistungsflussrichtung des Eigenbedarfstransformators 3 umkehrt. Die Schalteinrichtung 6 ist mit einer Rückspeiseverteilung 5 verbaut und in die Anschlussleitung für den Speiseanschluss 31 des Eigenbedarfstransformators 3 eingeschleift. Die Rückspeiseverteilung 5 ist in einem Gehäuse 50 verbaut, in welchem für jede Phase eine Sicherung 51 vorgesehen ist. An diese ist über jeweils einen Schraubverbinder 52 eine flexible Phasenleitung 45 angeschlossen. Dank der flexiblen Phasenleitung 45 kann die Rückspeiseverteilung 5 leicht modular in der Gondel 11 bei der Herstellung montiert und nach erfolgter Inbetriebnahme der Windenergieanlage 1 wieder demontiert werden.

Wird zur Inbetriebnahme die Schalteinrichtung 6 betätigt, so wird der Speiseanschluss 31 aus der in Fig. 4 (mit durchgezogener Linie) dargestellten unteren Stellung in die obere (gestrichelt dargestellte) Stellung für den Betrieb bei Inbetriebnahme umgelegt. Dabei ist der Speiseanschluss 31 des Eigenbedarfstransformators 3 nicht mehr mit dem Umrichter 15 als Leistungsquelle verbunden, sondern ist vielmehr an einen Oberspannungsanschluss 40 der Eigenversorgungseinheit 4 angeschlossen. An dem Oberspannungsanschluss 40 wird eine Spannung von etwa 660 V erwartet zur Versorgung von Oberspannungsverbrauchern, insbesondere des Schwenkantriebs 12. Der Ausgabeanschluss 32 des Eigenbedarfstransformators 3 ist an den Niederspannungsanschluss 41 der Eigenversorgungseinheit 4 angeschlossen und wird nunmehr über diese und die daran angeschlossene USV 7 mit der 400 V Niederspannung versorgt. Ggf. kann die USV 7 verstärkt sein mit dem Notstromaggregat 8, das vorzugsweise am Fuß des Turms 10 angeordnet und über eine Niedervoltleitung 48 angeschlossen ist. Damit wird bei betätigter Schalteinrichtung 6 der Eigenbedarfstransformator 3 nun also über seinen eigentlichen Ausgabeanschluss 32 gespeist mit einer Niederspannung in Höhe von 400 V, und gibt an seinem eigentlichen Speiseanschluss 31 eine höhere Spannung aus, nämlich in Höhe von 660 V. Die Leistungsflussrichtung durch den Eigenbedarfstransformator 3 ist damit umgekehrt (siehe gestrichelt dargestellter Pfeil) zu der ursprünglich vorgesehenen Leistungsflussrichtung (mit durchgezogener Linie dargestellter Pfeil). Durch diese Umschaltung des Eigenbedarfstransformators 3 wird erreicht, dass die für den Betrieb von Hochleistungskomponenten, wie dem Schwenkantrieb 12, erforderliche Spannung erzeugt werden kann aus der 400 V Spannung der Eigenversorgungseinheit 4, und zwar ohne dass es dazu eines zusätzlich gesonderten Transformators bedarf.

Die Schalteinrichtung 6 mit der Rückspeiseverteilung 5 ist modular ausgeführt, so dass sie nach erfolgter Inbetriebnahme entnehmbar ist. Der Eigenbedarfstransformator 3 wird dann fix über die Leistungsverbindung 17 mit dem Umrichter 15 verbunden. Damit wird die Rückspeiseverteilung 5 mit der Schalteinrichtung 6 frei und kann wieder verwendet werden für die Inbetriebnahme einer anderen Windenergieanlage.

## Patentansprüche

1. Windenergieanlage umfassend einen Windrotor (13) zum Antrieb eines Generators (14) mit einem Umrichter (15) zur Erzeugung elektrischer Leistung, eine Steuerung (2) und eine Eigenversorgungseinheit (4), für die ein Eigenbedarfstransformator (3) vorgesehen ist, der mit seinem Speiseanschluss (31) über eine Leistungsverbindung (17) an den Generator (14) und/oder Umrichter (15) angeschlossen ist und die Eigenversorgungseinheit (4) über ihren Niederspannungsanschluss (41) versorgt,
**dadurch gekennzeichnet, dass**
eine Schalteinrichtung (6) für den Eigenbedarfstransformator (3) vorgesehen ist, die dazu ausgebildet ist, in einem Rückwärtsbetrieb einen Leistungsfluss durch den Eigenbedarfstransformator (3) derart umzukehren, dass im Rückwärtsbetrieb der Speiseanschluss (31) des Eigenbedarfstransformators (3) als Ausgang fungiert und an einen Oberspannungsverbraucher angeschlossen ist, und ein Ausgabeanschluss (32) des Eigenbedarfstransformators (3) als Eingang fungiert und von dem Niederspannungsanschluss (41) der Eigenversorgungseinheit (4) gespeist ist.

2. Windenergieanlage nach Anspruch 1,
**dadurch gekennzeichnet, dass**
die Schalteinrichtung (6) Teil einer Rückspeiseverteilung (5) ist, welche vorzugsweise modular montierbar und demontierbar ist.

3. Windenergieanlage nach Anspruch 2,
**dadurch gekennzeichnet, dass**
die Rückspeiseverteilung (5) an dem Oberspannungsverbraucher angeschlossen ist und an den Speiseanschluss (31) des Eigenbedarfstransformators (3) angelegt ist.

4. Windenergieanlage nach Anspruch 2 oder 3,
**dadurch gekennzeichnet, dass**
die Rückspeiseverteilung (5) in der Windenergieanlage vormontiert ist.

5. Windenergieanlage nach einem der vorangehenden Ansprüche,
**dadurch gekennzeichnet, dass**
der Oberspannungsverbraucher ein Oberspannungsanschluss (40) der Eigenversorgungseinheit (4) ist.

6. Windenergieanlage nach einem der vorangehenden Ansprüche,
**dadurch gekennzeichnet, dass**
die Schalteinrichtung (6) eine umlegbare Kabelverbindung (45) umfasst.

7. Windenergieanlage nach einem der vorangehenden Ansprüche,
**dadurch gekennzeichnet, dass**
die Leistungsverbindung (17) bei betätigter Schalteinrichtung (6) von dem Eigenbedarfstransformator (3) isoliert ist.

8. Windenergieanlage nach einem der Ansprüche 2 bis 4,
**dadurch gekennzeichnet, dass**
die Rückspeiseverteilung (5) in einem Gehäuse (50) angeordnet ist, und vorzugsweise für jede Phase eine Sicherung (51) vorgesehen ist und weiter vorzugsweise zumindest auf einer Seite flexible Anschlussleitungen (45) zum ortsveränderlichen Betrieb der Rückspeiseverteilung (5) vorgesehen sind.

9. Nachrüstenergieversorgung für Windenergieanlagen, die einen Windrotor (13) zum Antrieb eines Generators (14) mit einem Umrichter (15) zur Erzeugung elektrischer Leistung und eine Steuerung (2) aufweisen, umfassend eine Energieversorgungseinheit (4) und einen Eigenbedarfstransformator (3), der mit seinem Speiseanschluss (31) über eine Leistungsverbindung (17) an den Generator (14) und/oder den Umrichter (15) angeschlossen ist und die Energieversorgungseinheit (4) über ihren Niederspannungsanschluss (41) versorgt,
**dadurch gekennzeichnet, dass**
eine Schalteinrichtung (6) für den Eigenbedarfstransformator (3) vorgesehen ist, die dazu ausgebildet ist, in einem Rückwärtsbetrieb einen Leistungsfluss durch den Eigenbedarfstransformator (3) derart umzukehren, dass im Rückwärtsbetrieb der Speiseanschluss (31) des Eigenbedarfstransformators (3) als Ausgang fungiert und an einen Oberspannungsverbraucher angeschlossen ist, und ein Ausgabeanschluss (32) des Eigenbedarfstransformators (3) als Eingang fungiert und von dem Niederspannungsanschluss (41) der Eigenversorgungseinheit (4) gespeist ist.

10. Nachrüstenergieversorgung nach Anspruch 9,
**dadurch gekennzeichnet, dass**
sie nach einem der Ansprüche 2 bis 8 weitergebildet ist.

11. Verfahren zum Errichten und Inbetriebnehmen einer Windenergieanlage, die einen Windrotor (13) zum Antrieb eines Generators (14) mit einem Umrichter (15) zur Erzeugung elektrischer Leistung und eine Steuerung (2) aufweist, wobei zur Eigenversorgung eine Eigenversorgungseinheit (4) und ein Eigenbedarfstransformator (3) vorgesehen sind, und wobei zur Inbetriebnahme die Steuerung (2) mit elektrischer Leistung versorgt wird,
**gekennzeichnet durch**
ein Umschalten des Eigenbedarfstransformators (3) in einen Rückwärtsbetrieb mit umgekehrter Leistungsflussrichtung, wobei der Eigenbedarfstransformator (3) eine erhöhte elektrischen Spannung erzeugt,
umfassend ein Verwenden des Speiseanschlusses (31) des Eigenbedarfstransformators als Ausgang und dessen Umklemmen von einer Leistungsquelle zu einem Oberspannungsanschluss (40) der Eigenversorgungseinheit (4).

12. Verfahren nach Anspruch 11,
**gekennzeichnet durch**
Verwenden des Rückwärtsbetriebs bei Inbetriebnahme der Windenergieanlage.

13. Verfahren nach Anspruch 11 oder 12,
**dadurch gekennzeichnet, dass**
eine Rückspeiseverteilung (5) vorgesehen ist, die vorzugsweise nach einem der Ansprüche 2 bis 8 weitergebildet ist.

## Claims

1. Wind turbine comprising a wind rotor (13) for driving a generator (14) comprising a converter (15) for generating electrical power, a controller (2) and an internal power supply unit (4), for which an auxiliaries transformer (3) is provided, which is connected at the feed-in connection (31) thereof to the generator (14) and/or converter (15) via a power link (17) and supplies power to the internal power supply unit (4) via the low-voltage connection (41) thereof,
**characterized in that**
a switching device (6) for the auxiliaries transformer (3) is provided, which is designed to reverse a power flow through the auxiliaries transformer (3) in a reverse operating mode in such a way that in the reverse operating mode the feed-in connection (31) of the auxiliaries transformer (3) acts as output and is connected to a high-voltage consumer, and an output connection (32) of the auxiliaries transformer (3) acts as input and is fed from the low-voltage connection (41) of the internal power supply unit (4).

2. Wind turbine according to Claim 1,
**characterized in that**
the switching device (6) is part of a feedback distribution system (5), which can preferably be assembled and disassembled in a modular manner.

3. Wind turbine according to Claim 2,
**characterized in that**
the feedback distribution system (5) is connected to the high-voltage consumer and is attached to the feed-in connection (31) of the auxiliaries transformer (3).

4. Wind turbine according to Claim 2 or 3,
**characterized in that**
the feedback distribution system (5) is preassembled in the wind turbine.

5. Wind turbine according to one of the preceding claims,
**characterized in that**
the high-voltage consumer is a high-voltage connection (40) of the internal power supply unit (4).

6. Wind turbine according to one of the preceding claims,
**characterized in that**
the switching device (6) comprises a reversible cable link (45).

7. Wind turbine according to one of the preceding claims,
**characterized in that**
the power link (17) is isolated from the auxiliaries transformer (3) when the switching device (6) is actuated.

8. Wind turbine according to one of Claims 2 to 4,
**characterized in that**
the feedback distribution system (5) is arranged in a housing (50), and a fuse (51) is preferably provided for each phase and flexible connection lines (45) for the mobile operation of the feedback distribution system (5) are furthermore preferably provided at least on one side.

9. Retrofitted energy supply system for wind turbines, which have a wind rotor (13) for driving a generator (14) comprising a converter (15) for generating electrical power and a controller (2), comprising an energy supply unit (4) and an auxiliaries transformer (3), which is connected at the feed-in connection (31) thereof to the generator (14) and/or to the converter (15) via a power link (17) and supplies power to the energy supply unit (4) via the low-voltage connection (41) thereof,
**characterized in that**
a switching device (6) for the auxiliaries transformer (3) is provided, which is designed to reverse a power flow through the auxiliaries transformer (3) in a reverse operating mode in such a way that in the reverse operating mode the feed-in connection (31) of the auxiliaries transformer (3) acts as output and is connected to a high-voltage consumer, and an output connection (32) of the auxiliaries transformer (3) acts as input and is fed from the low-voltage connection (41) of the internal power supply unit (4).

10. Retrofitted energy supply system according to Claim 9,
**characterized in that**
it is improved according to one of Claims 2 to 8.

11. Method for constructing and commissioning a wind turbine, which has a wind rotor (13) for driving a generator (14) comprising a converter (15) for generating electrical power and a controller (2), wherein an internal power supply unit (4) and an auxiliaries transformer (3) are provided for internal power supply, and wherein the controller (2) is supplied with electrical power for commissioning,
**characterized by**
switching over the auxiliaries transformer (3) in a reverse operating mode with reversed power flow direction, wherein the auxiliaries transformer (3) generates an increased voltage, comprising the use of the feed-in connection (31) of the auxiliaries transformer as output and the reconnection thereof from a power source to a high-voltage connection (40) of the internal power supply unit (4).

12. Method according to Claim 11,
**characterized by**
using the reverse operating mode when commissioning the wind turbine.

13. Method according to Claim 11 or 12,
**characterized in that**
a feedback distribution system (5), which is preferably developed according to one of Claims 2 to 8, is provided.

## Revendications

1. Eolienne, comprenant un rotor éolien (13) pour entraîner un générateur (14) doté d'un mutateur (15) pour produire une puissance électrique, une commande (2) et une unité d'auto-alimentation (4) pour laquelle un transformateur auxiliaire (3) est prévu qui est par sa connexion d'alimentation (31) connecté au générateur (14) et/ou au mutateur (15) par l'intermédiaire d'une connexion de puissance (17) et alimente l'unité d'auto-alimentation (4) par la connexion basse tension (41) de celle-ci,
**caractérisée en ce qu'**un dispositif de commutation (6) pour le transformateur auxiliaire (3) est prévu qui est réalisé pour inverser un flux de puissance à travers le transformateur auxiliaire (3) en fonctionnement inverse de telle sorte qu'en fonctionnement inverse, la connexion d'alimentation (31) du transformateur auxiliaire (3) sert de sortie et est connectée à un consommateur haute tension, et une connexion de sortie (32) du transformateur auxiliaire (3) sert d'entrée et est alimentée par la connexion basse tension (41) de l'unité d'auto-alimentation (4).

2. Eolienne selon la revendication 1, **caractérisée en ce que** le dispositif de commutation (6) fait partie d'un dispositif de distribution de régénération (5) qui peut être monté et démonté de préférence sous forme de module.

3. Eolienne selon la revendication 2, **caractérisée en ce que** le dispositif de distribution de régénération (5) est connecté au consommateur haute tension et est appliqué à la connexion d'alimentation (31) du transformateur auxiliaire (3).

4. Eolienne selon la revendication 2 ou 3, **caractérisée en ce que** le dispositif de distribution de régénération (5) est prémonté dans l'éolienne.

5. Eolienne selon l'une quelconque des revendications précédentes, **caractérisée en ce que** le consommateur haute tension est une connexion haute tension (40) de l'unité d'auto-alimentation (4).

6. Eolienne selon l'une quelconque des revendications précédentes, **caractérisée en ce que** le dispositif de commutation (6) comprend une liaison de câble rabattable (45).

7. Eolienne selon l'une quelconque des revendications précédentes, **caractérisée en ce que** la liaison de puissance (17) est isolée par rapport au transformateur auxiliaire (3) lorsque le dispositif de commutation (6) est actionné.

8. Eolienne selon l'une quelconque des revendications 2 à 4, **caractérisée en ce que** le dispositif de distribution de régénération (5) est disposé dans un boîtier (50), et de préférence un fusible (51) est prévu pour chaque phase, et également de préférence, au moins sur un côté, des lignes de connexion flexibles (45) sont prévues pour le fonctionnement mobile du dispositif de distribution de régénération (5).

9. Dispositif d'alimentation en énergie de post-équipement pour éoliennes qui présentent un rotor éolien (13) pour entraîner un générateur (14) doté d'un mutateur (15) pour produire une puissance électrique et une commande (2), comprenant une unité d'alimentation en énergie (4) et un transformateur auxiliaire (3) qui est connecté par sa connexion d'alimentation (31) au générateur (14) et/ou au mutateur (15) par l'intermédiaire d'une liaison de puissance (17) et alimente l'unité d'alimentation en énergie (4) par la connexion basse tension (41) de celle-ci,
**caractérisé en ce qu'**un dispositif de commutation (6) pour le transformateur auxiliaire (3) est prévu qui est réalisé pour inverser un flux de puissance à travers le transformateur auxiliaire (3) en fonctionnement inverse de telle sorte qu'en fonctionnement inverse, la connexion d'alimentation (31) du transformateur auxiliaire (3) sert de sortie et est connectée à un consommateur haute tension, et une connexion de sortie (32) du transformateur auxiliaire (3) sert d'entrée et est alimentée par la connexion basse tension (41) de l'unité d'auto-alimentation (4).

10. Dispositif d'alimentation en énergie de post-équipement selon la revendication 9, **caractérisé en ce qu'**il est réalisé selon l'une quelconque des revendications 2 à 8.

11. Procédé d'installation et de mise en service d'une éolienne qui présente un rotor éolien (13) pour entraîner un générateur (14) doté d'un mutateur (15) pour produire une puissance électrique, et une commande (2), dans lequel une unité d'auto-alimentation (4) et un transformateur auxiliaire (3) sont prévus pour l'alimentation interne, et dans lequel la commande (2) est alimentée en puissance électrique pour la mise en service,
**caractérisé par** une commutation du transformateur auxiliaire (3) sur un fonctionnement inverse avec un sens de flux de puissance inversé, le transformateur auxiliaire (3) produisant une tension électrique accrue,
comprenant une utilisation de la connexion d'alimentation (31) du transformateur auxiliaire comme sortie et la modification de celle-ci de source de puissance en connexion haute tension (40) de l'unité d'auto-alimentation (4).

12. Procédé selon la revendication 11, **caractérisé par** l'utilisation du fonctionnement inverse lors de la mise en service de l'éolienne.

13. Procédé selon la revendication 11 ou 12, **caractérisé en ce qu'**un dispositif de distribution de régénération (5) est prévu qui est réalisé de préférence selon l'une quelconque des revendications 2 à 8.
